# EUROPEAN PATENT SPECIFICATION

(11) **EP 1 541 017 B1**
(45) Date of publication and mention of the grant of the patent: **05.08.2009**
(21) Application number: 04078196.5
(22) Date of filing: 24.11.2004
(51) Int. Cl.: A01K 1/12, A01K 1/00

(54) **An assembly for and a method of managing a herd of animals moving about freely**
Einrichtung und Verfahren zur Verwaltung einer Herde von frei herumlaufenden Tieren
Système et procédé de conduite d'un troupeau d'animaux non attachés

(30) Priority: 12.12.2003 NL 1024997
(43) Date of publication of application: 15.06.2005
(60) Divisional application: 09075186.8
(73) Proprietor: Lely Enterprises AG, 6300 Zug (CH)
(72) Inventor: Van den Berg, Karel, 2971 BR Bleskensgraaf (NL)
(74) Representative: Corten, Maurice Jean F.M.

(56) References cited:
- EP-A- 0 801 894
- EP-A- 1 078 570
- WO-A-03/030629
- US-B1- 6 550 425
- US-B1- 6 622 651

## Description

The invention relates to an assembly for managing a herd of animals moving about freely.

Such an assembly is known from WO 96/19916. In this known assembly, the control unit controls the gate in such a way that, when it has been found, for example, that an animal has not been milked, the animal is led from the enclosed area to a separation area. In said separation area the animal can then be milked manually. Although this known assembly functions properly, the number of times a farmer has to go to the separation area to milk an animal manually is found to be relatively large, taking up an unnecessarily large part of his time. This may also have an adverse effect on the number of times an animal can be milked per day, resulting in a reduced milk production.

EP-A2-0.801.894 discloses a construction for automatically milking animals provided with a milk box and an area where the animals are allowed to move freely. There may be provided a limited space where an animal may be retained and wherein the milk box is situated. A door which allows an animal to enter a pasture is, based upon certain conditions, controlled by a computer.

The invention aims inter alia at providing an assembly for managing a herd of animals moving about freely by means of which the above-mentioned drawbacks are solved at least partially.

To this end, an assembly for managing a herd of animals moving about freely of the above described type according to the invention comprises the measures of claim 1. The invention is based on the insight that, if an animal, in case of a non-successful milking, is offered again the possibility to visit the milking station, the chance of a successful milking of the animal is increased. The number of times an animal is led into the separation area is thus reduced. According to the invention, the animal can leave the surrounded area only when she has been milked, and the animal can walk freely from the feeding device to the milking station. Owing to the fact that a feeding device is provided in the surrounded area, a longer stay in the surrounded area without harmful consequences is possible.

According to the invention, the feeding device is provided with a feed measuring device for detecting whether an animal has eaten and for emitting an eating signal, and the control unit is suitable for opening the gate, in order that an animal can leave the surrounded area when also the eating signal indicates that the animal has eaten. In particular if the feed supplied is concentrate or the like, this provides the possibility to ensure that the animal only leaves the surrounded area when she has not only been milked but has also consumed feed.

In an embodiment of an assembly according to the invention, the control unit is suitable for determining the time elapsed since the milking of the animal, and the control unit is suitable for opening the gate, in order that an animal can leave the surrounded area when also the time elapsed is longer than or equal to a threshold time. By properly selecting the threshold time, for example in the order of 30 minutes, it will be possible for the teat openings, the so-called teat orifices, of the animal to close before the animal can leave the surrounded area via the gate.

The threshold time is in particular animal-dependent, so that it is possible, for example, to take into account the period of time, varying per animal, within which the teat orifices will close.

In a favourable embodiment of an assembly according to the invention, the milking station is provided with connection means for automatically connecting a teat cup to a teat of an animal.

In a further embodiment of an assembly according to the invention, the milking device is suitable for determining the number of times an animal has successively entered the milking station without a successful milking has been achieved, and for emitting a sum signal indicative of that number. In another embodiment, the control unit is suitable for emitting a warning signal when said sum signal indicates that the number of times the milking station has been entered is larger than a particular threshold number. Said warning signal can be sent, for example by telephone or by internet or an equivalent system, for example to the farmer who is then able to visit the cow in question. It is pointed out here that the animal remains in the surrounded area.

In a preferred embodiment of an assembly according to the invention, the feed measuring device is suitable for determining the amount of feed consumed by an animal, and the control unit is suitable for opening the gate, in order that an animal can leave the surrounded area only when the amount of feed consumed is larger than or equal to a threshold amount. This provides the possibility to ensure that an animal consumes a sufficient amount of feed before leaving the surrounded area.

The threshold amount is in particular animal-dependent, so that it is possible to take individual animal feeding into account.

In a preferred embodiment of an assembly according to the invention, the assembly is provided with a surrounded resting area with cubicles, the gate being located between the surrounded area and the surrounded resting area for the purpose of providing an animal access to the resting area.

The assembly is preferably provided with a one-way gate for providing access to the surrounded area from the resting area, the one-way gate providing in particular free access to the surrounded area for all the animals.

The invention also relates to a method of managing a herd of animals moving about freely, according to claim 9. The method comprising the step of receiving animals in an area surrounded by an enclosure, which enclosure is provided with a gate, the step of milking an animal in a milking station arranged in the surrounded area, the step of automatically supplying feed to an animal by means of a feeding device arranged separately from the milking station in the surrounded area, the step of determining the identity of an animal, and the step of controlling the functioning of the gate with the aid of the animal recognition signal. The step of controlling the functioning of the gate comprises the opening of the gate, in order that an animal can leave the surrounded area only when the animal has been milked.

Preferred embodiments of a method according to the invention are described in the relevant sub-claims.

The invention will be elucidated hereinafter with reference to an exemplary embodiment shown in the figure.

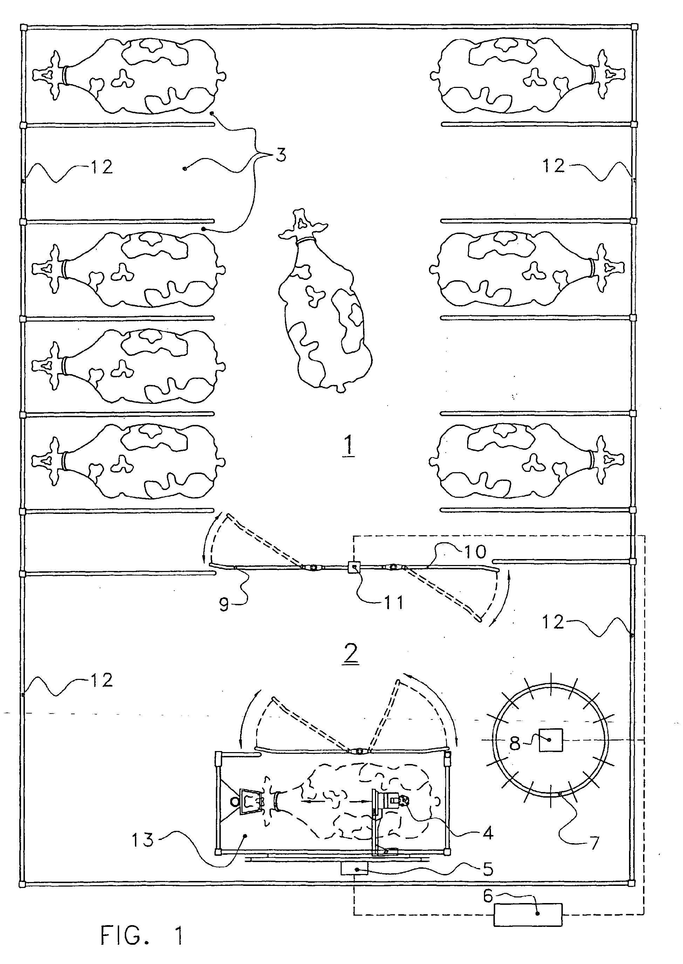

Figure 1 is a schematic plan view of an assembly according to the invention. The assembly constitutes part of a farm comprising a first area 1 for containing a herd of animals. Said first area may be a surrounded area comprising inter alia a number of cubicles 3. The first area may also comprise a pasture where the herd is allowed to move about freely.

The farm further comprises an area 2 surrounded by an enclosure 12, which area 2 is always accessible, via a one-way gate 10, for animals present in the first area 1. The enclosure 12 is further provided with a gate 9 capable of being operated by a control unit 11, which control unit 11 comprises an animal recognition unit constituting part of an animal recognition system, through which gate 9 animals can reach the first area 1 from the surrounded area 2. It is pointed out that, although the figure shows two one-way gates, any other number of gates is applicable within the invention, the arrangement being such that at any rate the gate providing animals access to the first area 1 from the surrounded area 2 is capable of being operated with the aid of animal recognition data. Therefore, it is also possible that there is only one gate providing access to the surrounded area 2 at all times and providing exit from the surrounded area only in a controlled manner.

In the surrounded area 2 there is arranged a milking station 13 that is provided with connection means 4 for automatically connecting a teat cup to a teat of an animal. There is provided a milking device 5 comprising an animal recognition unit for detecting whether an animal has been milked. Said milking device 5 emits a milking signal to a central control unit 6, which milking signal is indicative of the fact whether or not an animal has been milked.

In the surrounded area 2 there is arranged a feeding device 7, controlled by a control unit 8, for automatically supplying feed to an animal. Said feeding device 7 is located remotely from the milking station 13. The control unit 8 also comprises an animal recognition unit for determining the identity of an animal.

The animal recognition units, which may alternatively be arranged separately from the control units, emit an animal recognition signal to the central control unit 6. In order to determine which animals are present in the surrounded area 2, it is possible also to place an animal recognition unit near the gate 10.

According to the invention, the control unit 11 opens the gate 9 with the aid of signals received from the central control unit 6, in order that an animal can leave the surrounded area 2 only when the milking signal indicates that the animal in question has been milked. When an animal that has not yet been milked is located in the vicinity of the gate 9, the gate is not opened and the animal will have to stay in the surrounded area until she has been milked.

The milking device 5 may also be suitable for determining the number of times an animal has successively entered the milking station 13 without a successful milking has been achieved. The milking device 5 emits a sum signal to the central control unit 6, which sum signal is indicative of that number. The central control unit 6 emits a warning signal when said sum signal indicates that the number of times is larger than a particular threshold number. Said warning signal is sent, for example by telephone or by internet, for example to the farmer who is then able to visit the cow in question. It is pointed out here that the animal remains in the surrounded area 2.

The control unit 8 of the feeding device 7 is provided with a feed measuring device known per se (non-shown), such as a weighing device, for detecting whether an animal has eaten. The control unit 8 emits an eating signal to the central control unit 6, which eating signal is indicative of the fact whether or not an animal has eaten. The central control unit 6 controls the control unit 11 for opening the gate 9 in order that an animal can leave the surrounded area 2 only when the eating signal indicates that the animal has eaten. It is pointed out here that, according to one aspect of the invention, the control unit 11 opens the gate 9 only when the milking signal indicates that an animal has been milked, irrespective of whether or not the eating signal indicates that an animal has eaten, and according to another aspect of the invention, the control unit 11 opens the gate 9 only when the eating signal indicates that an animal has eaten, irrespective of whether or not the milking signal indicates that an animal has been milked. It is further pointed out that, within the scope of the invention, by opening the gate is also meant that a gate is unlocked in order that an animal can open the gate herself by pushing.

With the aid of data from the milking device 5, it is possible for the central control unit 6 to determine, additionally, the time elapsed since the milking of the animal. The opening of the gate 9, in order to enable an animal to leave the surrounded area 2, takes place only when the time elapsed is longer than or equal to a threshold time. By properly selecting the threshold time, for example in the order of 30 minutes, it will be possible for the teat openings, the so-called teat orifices, of the animal to close before the animal can leave the surrounded area via the gate 9. The threshold time can be adjusted animal-dependently, so that it is possible, for example, to take into account the period of time, varying per animal, within which the teat orifices will close.

With the aid of the feed measuring device, it is possible for the control unit 8 to determine, additionally, an amount of feed consumed by an animal, and to emit a corresponding signal to the central control unit 6. Under the control of the central control unit 6, the control unit 11 opens the gate 9, in order that an animal can leave the surrounded area only when the amount of feed consumed is larger than or equal to a threshold amount. The threshold amount is in particular animal-dependent. In this manner an animal can leave the surrounded area 2 only when the animal has consumed sufficient feed, for example concentrate. This is in particular important if the animals are grazing in the pasture, during which the total amount of feed consumed by an animal is difficult to determine and it is uncertain whether an animal has consumed an amount of feed necessary for the milk production.

Although the invention has been described in the foregoing with reference to milking and feeding of an animal, it will be obvious that the invention is also applicable to other treatments performed on an animal in the surrounded area, such as leg treatment, administration of medicine, weighing of an animal, and the like. Moreover, it is pointed out that, within the scope of the invention, by supplying feed to an animal is also meant supplying liquid to an animal.

## Claims

1. An assembly for managing a herd of animals moving about freely, which assembly is provided with an animal receiving area surrounded by an enclosure (12), the enclosure(12) being provided with a gate (9), with a milking station (13) arranged in the surrounded area (2), which milking station (13) is provided with a milking device (5) for detecting whether an animal has been milked and for emitting a milking signal, with an animal recognition system for determining the identity of an animal and for emitting an animal recognition signal, and with a control unit (6) for controlling the functioning of the gate (9) with the aid of the animal recognition signal, wherein
the control unit (6) is suitable for opening the gate (9), in order that an animal can leave the surrounded area (2) only when the milking signal indicates that the animal has been milked.

2. An assembly as claimed in claim 1, **characterized in that** the control unit is suitable for determining the time elapsed since the milking of the animal, and **in that** the control unit is suitable for opening the gate, in order that an animal can leave the surrounded area when also the time elapsed is longer than or equal to a threshold time.

3. An assembly as claimed in claim 2, **characterized in that** the threshold time is animal-dependent.

4. An assembly as claimed in any one of the preceding claims, **characterized in that** the milking station (13) is provided with connection means for automatically connecting a teat cup to a teat of an animal.

5. An assembly as claimed in claim 1, **characterized in that** the feed measuring device is suitable for determining the amount of feed consumed by an animal, and **in that** the control unit (6) is suitable for opening the gate (9), in order that an animal can leave the surrounded area (2) only when the amount of feed consumed is larger than or equal to a threshold amount.

6. An assembly as claimed in claim 5, **characterized in that** the threshold amount is animal-dependent.

7. An assembly as claimed in any one of the preceding claims, **characterized in that** the assembly is provided with a surrounded resting area with cubicles, the gate (9) being located between the surrounded area (2) and the surrounded resting area for the purpose of providing an animal access to the resting area.

8. An assembly as claimed in claim 7, **characterized in that** the assembly is provided with a one-way gate (10) for providing access to the surrounded area (2) from the resting area.

9. A method of managing a herd of animals moving about freely, the method comprising the step of receiving animals in an area surrounded by an enclosure (12), which enclosure(12) is provided with a gate (9), the step of milking an animal in a milking station (13) arranged in the surrounded area (2), the step of determining the identity of an animal, and the step of controlling the functioning of the gate (9) with the aid of the animal recognition signal, wherein
the step of controlling the functioning of the gate (9) comprises the opening of the gate (9), in order that an animal can leave the surrounded area (2) only when the animal has been milked.

10. A method as claimed in claim 9, **characterized in that** the method comprises the step of determining the time elapsed since the milking of the animal, the gate being opened only when it is established that also the time elapsed is longer than or equal to a threshold time.

11. A method as claimed in claim 10, **characterized in that** the threshold time is set animal-dependently.

12. A method as claimed in any one of claims 9 to 11, **characterized in that** the milking comprises the step of automatically connecting a teat cup to a teat of an animal.

13. A method as claimed in claim 9, **characterized in that** the method comprises the step of determining the amount of feed consumed by an animal, the gate (9) being opened only when it is established that the amount of feed consumed is larger than or equal to a threshold amount.

14. A method as claimed in claim 13, **characterized in that** the threshold amount is set animal-dependently.

15. A method as claimed in any one of claims 9 to 14, **characterized in that**, by opening the gate (9), the animal is provided access to a resting area comprising cubicles.

## Patentansprüche

1. Einrichtung zum Verwalten einer Herde frei laufender Tiere, wobei diese Einrichtung einen Tierempfangsbereich umfasst, der von einer Einfriedung (12) umschlossen ist, wobei die Einfriedung (12) mit einem Tor (9) versehen ist, mit einer Melkstation (13), die in dem umschlossenen Bereich (2) angeordnet ist, wobei die Melkstation (13) mit einer Melkvorrichtung (5) ausgestattet ist, um zu detektieren, ob ein Tier gemolken wurde, und um ein Melksignal auszugeben, einem Tiererkennungssystem zum Bestimmen der Identität eines Tieres und zum Ausgeben eines Tiererkennungssignals, und einer Steuereinheit (6) zum Steuern der Funktion des Tores (9) mit Hilfe des Tiererkennungssignals, wobei
die Steuereinheit (6) zum Öffnen des Tores (9) so konfiguriert ist, dass ein Tier den umschlossenen Bereich (2) nur dann verlassen kann, wenn das Melksignal anzeigt, dass das Tier gemolken wurde,
die Einrichtung mit einer Fütterungsvorrichtung (7) zum automatischen Versorgen eines Tieres mit Futter ausgestattet ist, wobei die Fütterungsvorrichtung (7) separat von der Melkstation (13) in dem umschlossenen Bereich (2) angeordnet ist, und
die Fütterungsvorrichtung (7) mit einer Futtermessvorrichtung ausgestattet ist, um zu detektieren, ob ein Tier gefressen hat, und um ein Fresssignal auszugeben, und die Steuereinheit (6) geeignet ist, das Tor (9) zu öffnen, damit ein Tier den umschlossenen Bereich (2) verlassen kann, wenn außerdem das Fresssignal anzeigt, dass das Tier gefressen hat.

2. Einrichtung nach Anspruch 1,
**dadurch gekennzeichnet, dass** die Steuereinheit geeignet ist, die Zeit zu bestimmen, die seit dem Melken des Tier verstrichen ist, und dass die Steuereinheit geeignet ist, das Tor nur zu öffnen, damit ein Tier den umschlossenen Bereich verlassen kann, wenn außerdem die verstrichene Zeit mindestens so lang ist wie eine Schwellen-Zeit.

3. Einrichtung nach Anspruch 2,
**dadurch gekennzeichnet, dass** die Schwellen-Zeit tierabhängig ist.

4. Einrichtung nach einem der vorhergehenden Ansprüche,
**dadurch gekennzeichnet, dass** die Melkstation (13) mit einer Verbindungsvorrichtung ausgestattet ist, um einen Zitzenbecher automatisch mit einer Zitze eines Tieres zu verbinden.

5. Einrichtung nach Anspruch 1,
**dadurch gekennzeichnet, dass** die Futtermessvorrichtung geeignet ist, die Futtermenge zu bestimmen, die ein Tier verzehrt hat, und dass die Steuereinheit (6) geeignet ist, das Tor (9) nur zu öffnen, damit ein Tier den umschlossenen Bereich (2) verlassen kann, wenn die verzehrte Futtermenge mindestens so groß ist wie eine Schwellen-Menge.

6. Einrichtung nach Anspruch 5,
**dadurch gekennzeichnet, dass** die Schwellen-Menge tierabhängig ist.

7. Einrichtung nach einem der vorhergehenden Ansprüche,
**dadurch gekennzeichnet, dass** die Einrichtung mit einem umschlossenen Ruhebereich mit Liegeboxen ausgestattet ist, wobei das Tor (9) zwischen dem umschlossenen Bereich (2) und dem umschlossenen Ruhebereich angeordnet ist, um einen Zugang für die Tiere zu dem Ruhebereich zu schaffen.

8. Einrichtung nach Anspruch 7,
**dadurch gekennzeichnet, dass** die Einrichtung mit einem Einwegtor (10) ausgestattet ist, um von dem Ruhebereich aus einen Zugang zu dem umschlossenen Bereich (2) zu schaffen.

9. Verfahren zum Verwalten einer Herde frei laufender Tiere, wobei das Verfahren folgende Schritte umfasst: Aufnehmen von Tieren in einem Bereich, der von einer Einfriedung (12) umschlossen ist, wobei die Einfriedung (12) mit einem Tor (9) ausgestattet ist, Melken eines Tieres in einer Melkstation (13), die in dem umschlossenen Bereich (2) angeordnet ist, Feststellen der Identität eines Tieres, und Steuern der Funktion des Tores (9) mit Hilfe des Tiererkennungssignals, wobei
der Schritt des Steuerns der Funktion des Tores (9), das Öffnen des Tores (9) umfasst, damit ein Tier den umschlossenen Bereich (2) nur verlassen kann, wenn das Tier gemolken wurde,
das Verfahren den Schritt umfasst, das Tier automatisch mittels einer Fütterungsvorrichtung (7), die separat von der Melkstation (13) in dem umschlossenen Bereich (2) angeordnet ist, mit Futter zu versorgen, und
das Verfahren den Schritt umfasst zu detektieren, ob ein Tier gefressen hat, und der Schritt des Steuerns der Funktion des Tores (9) umfasst, das Tor (9) zu öffnen, damit ein Tier den umschlossenen Bereich (2) verlassen kann, wenn das Tier auch gefressen hat.

10. Verfahren nach Anspruch 9,
**dadurch gekennzeichnet, dass** das Verfahren den Schritt umfasst, die Zeit zu bestimmen, die seit dem Melken des Tieres verstrichen ist, wobei das Tor nur geöffnet wird, wenn festgestellt wird, dass außerdem die verstrichene Zeit mindestens so lang ist wie eine Schwellen-Zeit.

11. Verfahren nach Anspruch 10,
**dadurch gekennzeichnet, dass** die Schwellen-Zeit tierabhängig eingestellt wird.

12. Verfahren nach einem der Ansprüche 9 bis 11,
**dadurch gekennzeichnet, dass** das Melken den Schritt umfasst, einen Zitzenbecher automatisch mit einer Zitze eines Tieres zu verbinden.

13. Verfahren nach Anspruch 9,
**dadurch gekennzeichnet, dass** das Verfahren den Schritt umfasst, die von einem Tier verzehrte Futtermenge zu bestimmen, wobei das Tor (9) nur geöffnet wird, wenn festgestellt wird, dass die verzehrte Futtermenge mindestens so groß ist wie eine Schwellen-Menge.

14. Verfahren nach Anspruch 13,
**dadurch gekennzeichnet, dass** die Schwellen-Menge tierabhängig eingestellt wird.

15. Verfahren nach einem der Ansprüche 9 bis 14,
**dadurch gekennzeichnet, dass** das Tier durch Öffnen des Tores (9) Zugang zu einem Ruhebereich, der Liegeboxen umfasst, erhält.

## Revendications

1. Ensemble pour gérer un troupeau d'animaux non attachés, ledit ensemble étant doté d'une zone de réception d'animaux entourée par un enclos (12), l'enclos (12) étant doté d'une porte (9), une station de traite (13) étant disposée dans la zone entourée (2), ladite station de traite (13) disposant d'un appareil de traite (5) pour détecter si un animal a été trait et pour émettre un signal de traite, avec un système de reconnaissance d'animal pour déterminer l'identité d'un animal et pour émettre un signal de reconnaissance d'animal, et d'une unité de commande (6) pour commander le fonctionnement de la porte (9) à l'aide du signal de reconnaissance d'animal, dans lequel :
l'unité de commande (6) est adaptée pour ouvrir la porte (9), afin qu'un animal puisse quitter la zone entourée (2) seulement quand le signal de traite indique que l'animal a été trait,
l'ensemble est doté d'un dispositif d'alimentation (7) pour alimenter automatiquement un animal, ledit dispositif d'alimentation (7) étant disposé séparément de la station de traite (13) dans la zone entourée (2) ; et
le dispositif d'alimentation (7) est doté d'un dispositif de mesure pour détecter si un animal a mangé et pour émettre un signal de consommation du repas, et l'unité de commande (6) étant adaptée pour ouvrir la porte (9), afin qu'un animal puisse quitter la zone entourée (2) également quand le signal de consommation du repas indique que l'animal a mangé.

2. Ensemble selon la revendication 1, **caractérisé en ce que** l'unité de commande est adaptée pour déterminer le temps écoulé depuis la traite de l'animal, et **en ce que** l'unité de commande est adaptée pour ouvrir la porte, afin qu'un animal puisse quitter la zone entourée également quand la durée écoulée est égale ou plus longue à une durée seuil.

3. Ensemble selon la revendication 2, **caractérisé en ce que** la durée seuil dépend de l'animal.

4. Ensemble selon l'une quelconque des revendications précédentes, **caractérisé en ce que** la station de traite (13) est dotée d'un moyen de raccordement pour relier automatiquement un gobelet trayeur au pis d'un animal.

5. Ensemble selon la revendication 1, **caractérisé en ce que** le dispositif de mesure d'alimentation est adapté pour déterminer la quantité d'alimentation consommée par un animal, et **en ce que** l'unité de commande (6) est adaptée pour ouvrir la porte (9), afin qu'un animal puisse quitter la zone entourée (2) seulement quand la quantité d'alimentation consommée est supérieure ou égale à une quantité seuil.

6. Ensemble selon la revendication 5, **caractérisé en ce que** la quantité seuil dépend de l'animal.

7. Ensemble selon l'une quelconque des revendications précédentes, **caractérisé en ce que** l'ensemble est doté d'une zone de repos entourée par des box, la porte (9) étant située entre la zone entourée (2) et la zone de repos entourée afin de fournir à un animal l'accès à la zone de repos.

8. Ensemble selon la revendication 7, **caractérisé en ce que** l'ensemble est doté d'une porte à sens unique (10) pour fournir l'accès à la zone entourée (2) depuis la zone de repos.

9. Procédé de gestion d'un troupeau d'animaux non attachés, le procédé comprenant l'étape de réception des animaux dans une zone entourée par un enclos (12), ledit enclos (12) étant doté d'une porte (9), l'étape de traite d'un animal dans une station de traite (13) étant organisée dans la zone entourée (2), l'étape de détermination de l'identité d'un animal, et l'étape de commande du fonctionnement de la porte (9) à l'aide du signal de reconnaissance de l'animal, dans lequel :
l'étape de commande du fonctionnement de la porte (9) comprend l'ouverture de la porte (9) afin qu'un animal puisse quitter la zone entourée (2) uniquement quand l'animal a été trait,
le procédé comprend l'étape de fourniture automatique d'alimentation à un animal au moyen d'un dispositif d'alimentation (7) disposé séparément de la station de traite (13) dans la zone entourée (2) ; et
le procédé comprend l'étape de détection qu'un animal a mangé, l'étape de commande du fonctionnement de la porte (9) comprend l'ouverture de la porte (9), afin qu'un animal puisse quitter la zone entourée (2) quand l'animal a également mangé.

10. Procédé selon la revendication 9, **caractérisé en ce que** le procédé comprend l'étape de détermination de la durée écoulée depuis la traite de l'animal, la porte étant ouverte seulement quand il est établi également que la durée écoulée est supérieure ou égale à une durée de seuil.

11. Procédé selon la revendication 10, **caractérisé en ce que** la durée de seuil est fixée selon l'animal.

12. Procédé selon l'une quelconque des revendications 9 à 11, **caractérisé en ce que** la traite comprend l'étape de raccordement automatique d'un gobelet trayeur au pis d'un animal.

13. Procédé selon la revendication 9, **caractérisé en ce que** le procédé comprend l'étape de détermination de la quantité d'alimentation consommée par un animal, la porte (9) étant ouverte seulement quand il est établi que la quantité d'alimentation consommée est supérieure ou égale à une quantité seuil.

14. Procédé selon la revendication 13, **caractérisé en ce que** la quantité seuil est fixée selon l'animal.

15. Procédé selon l'une quelconque des revendications 9 à 14, **caractérisé en ce qu'**en ouvrant la porte (9), l'animal a accès à une zone de repos comprenant des box.
